# FASCICULE DE BREVET EUROPEEN

(11) **EP 2 443 716 B1**
(45) Date de publication et mention de la délivrance du brevet: **13.03.2019**
(21) Numéro de dépôt: 10734160.4
(22) Date de dépôt: 11.06.2010
(51) Int. Cl.: H02H 3/06

(54) **DISPOSITIF PERMETTANT DE TESTER LA PRESENCE D'UN COURT-CIRCUIT ET DISJONCTEUR LE COMPRENANT**
VORRICHTUNG ZUM TESTEN DES VORHANDENSEINS EINES KURZSCHLUSSES UND SCHUTZSCHALTER DAMIT
DEVICE FOR TESTING THE PRESENCE OF A SHORT-CIRCUIT, AND CIRCUIT BREAKER INCLUDING THE SAME

(30) Priorité: 18.06.2009 FR 0902955
(43) Date de publication de la demande: 25.04.2012
(73) Titulaire: Schneider Electric Industries SAS, 92500 Rueil-Malmaison (FR)
(72) Inventeur: BLONDEL, Charles, F-38000 Grenoble (FR)
(74) Mandataire: Colette, Marie-Françoise
(86) Numéro de dépôt international: PCT/FR2010/000431
(87) Numéro de publication internationale: WO 2010/146248

(56) Documents cités:
- EP-A1- 0 552 113
- EP-A1- 1 569 314
- EP-A2- 1 744 428
- DE-A1- 3 520 904
- DE-A1- 19 601 878
- DE-B3- 10 244 961

## Description

### DOMAINE TECHNIQUE

L'invention concerne la vérification, préalablement à sa mise sous tension, de l'intégrité d'une installation électrique, en particulier résidentielle, qui a été coupée par un dispositif de protection. En particulier, l'invention se rapporte à un dispositif permettant de reconnaître la présence d'un court-circuit résiduel.

### ETAT DE LA TECHNIQUE

Une installation domestique comprend usuellement un ou plusieurs appareils de type disjoncteurs permettant de mettre hors circuit chaque ligne d'alimentation qu'ils protègent. En particulier, l'appareil de protection réagit à diverses situations de défaut et isole la ligne concernée pour éviter tout accident : l'apparition d'un court-circuit ou d'une surtension passagère entraîne ainsi le déclenchement du disjoncteur. Qui plus est, pour une opération de maintenance, l'alimentation peut être coupée par actionnement manuel.

Un ré-enclenchement du disjoncteur permet la mise sous tension de la ligne et l'alimentation électrique. Cependant, si le défaut de court-circuit n'a pas été résolu, l'appareil de protection déclenche une nouvelle fois pour isoler la ligne. Outre l'éventuelle aggravation du défaut original suite à plusieurs courts-circuits successifs, chaque déclenchement sur court-circuit peut engendrer, en raison du fort courant coupé, une usure accélérée de l'appareil de protection pouvant entraîner à long terme une perte de fiabilité. Il apparaît ainsi souhaitable de pouvoir détecter que la ligne n'est plus en défaut préalablement à sa mise sous tension.

Différents dispositifs ont été développés afin de pouvoir vérifier la présence résiduelle d'un court-circuit sur une ligne mise hors tension. Cependant, bien que la détection d'un court-circuit résiduel préalablement à la mise sous tension de la ligne soit souhaitable, les dispositifs existants utilisent l'énergie de la ligne pour fonctionner, au détriment de la complète isolation de son circuit aval par rapport au circuit amont, ce qui peut être rédhibitoire lorsque l'utilisateur souhaite réaliser des travaux sur son installation électrique et décide donc de déclencher manuellement son appareil de protection. Par ailleurs, les dispositifs entraînent généralement une détérioration du taux de fiabilité des disjoncteurs résidentiels classiques, basés sur une technologie électromécanique, par l'insertion d'un système électronique.

En particulier, le document EP 0 563 695 décrit un circuit auxiliaire permettant par différents tests d'évaluer l'intégrité de la ligne protégée ; cependant, le circuit électronique est raccordé de façon permanente à la phase et au neutre, entraînant ainsi une consommation d'énergie supplémentaire et une perte d'isolation galvanique. De même, le dispositif auxiliaire décrit dans le document EP 1 724 803 permet de détecter les défauts de court-circuit pour empêcher la fermeture d'un disjoncteur, mais au détriment de la sécurité d'isolement de la ligne et de la consommation électrique. Qui plus est, les dispositifs existants (voir aussi par exemple EP 1 744 428, DE 196 01 878 ou EP 1 569 314) nécessitent un raccordement entre la phase et le neutre des lignes électriques, et ne permettent pas de pouvoir réaliser ce test également sur les disjoncteurs monophasés résidentiels.

### EXPOSE DE L'INVENTION

Parmi autres avantages, l'invention vise à pallier des inconvénients des dispositifs existants, et à intégrer la détection d'un défaut de type court-circuit dans la protection des lignes électriques n'entraînant pas de manifestations néfastes, et notamment perte d'isolation galvanique ou consommation électrique supplémentaire. En particulier, le dispositif de test selon l'invention ne nécessite qu'un conducteur d'alimentation, et peut donc être utilisé sur les lignes monophasées, et ne modifie pas l'appareil de protection de la ligne en tant que tel, n'altérant donc pas sa fiabilité.

Sous un de ses aspects, l'invention concerne un dispositif de test de court-circuit comprenant un circuit à raccorder sur un conducteur de ligne électrique, de préférence la phase dans une alimentation domestique ; notamment, le dispositif selon l'invention ne comprend que deux extrémités de raccordement pour son fonctionnement de base, lesdites extrémités étant destinées à fermer un circuit avec un seul conducteur. Entre ses deux extrémités de raccordement, le dispositif selon l'invention comprend des moyens de type interrupteur permettant de déconnecter le circuit de la ligne, cette position ouverte étant la position de repos du dispositif de test. Le dispositif comprend en outre une unité de contrôle et des moyens de test : l'unité de contrôle permet de vérifier le passage du courant, c'est-à-dire la fermeture des moyens interrupteurs ; lors du passage du courant, qui peut avantageusement être signalé par des moyens indicateurs, l'unité de contrôle active les moyens de test qui permettent de déterminer si le courant circulant entre les extrémités du dispositif est du type court-circuit. Les moyens de test comprennent à cette fin un circuit électrique raccordé en parallèle à l'unité de contrôle, et une unité de traitement permettant d'analyser les paramètres du courant circulant dans le circuit des moyens de test. De préférence, les moyens de test sont universels et permettent la détermination d'un court-circuit pour tout type de charge alimentée par la ligne principale, par exemple grâce à un circuit à multiples branches dont l'alimentation peut être commandée ; quoi qu'il en soit, les moyens de test sont adaptés pour un fonctionnement par couplage sur un seul conducteur, sans nécessiter un raccordement vers une phase et un neutre, ou vers deux conducteurs différents.

Selon un mode de réalisation préféré, l'unité de contrôle comprend des moyens permettant d'indiquer le résultat des moyens de test, notamment une diode pouvant prendre deux couleurs selon le résultat. L'unité de contrôle est de préférence adaptée pour alimenter l'unité de traitement des moyens de test par un courant stable, par exemple via un élément capacitif chargé par la ligne testée.

Sous un autre aspect, l'invention concerne un auxiliaire comprenant le dispositif de test logé dans un boîtier qui peut être connecté à un pôle d'un quelconque appareil de coupure et qui comprend un organe actionneur des moyens interrupteurs, par exemple un bouton poussoir. Avantageusement, l'organe actionneur est neutralisé lorsque l'appareil de coupure est en position de passage du courant.

Sous un autre aspect, l'invention concerne un appareil de coupure comprenant le dispositif de test connecté à un de ses pôles, en parallèle autour des moyens de coupure, usuellement une paire de contacts mobiles relativement l'un à l'autre. L'organe d'actionnement des moyens interrupteurs du dispositif de test est de préférence neutralisé en position fermée de l'appareil de coupure, et peut notamment être identique à la manette d'actionnement de la ou des paires de contacts qui est alors apte à prendre une troisième position de test.

L'invention est plus généralement définie dans les revendications qui suivent.

### BREVE DESCRIPTION DES FIGURES

D'autres avantages et caractéristiques ressortiront plus clairement de la description qui suit de modes particuliers de réalisation de l'invention, donnés à titre illustratif et nullement limitatifs, représentés dans les figures annexées.
Les figures 1A et 1B représente un dispositif selon un mode de réalisation préféré et sa mise en place sur une ligne d'alimentation biphasée protégée.
Les figures 2A à 2C montrent les trois phases de fonctionnement d'un disjoncteur unipolaire doté d'un dispositif selon l'invention.
La figure 3 représente un mode de réalisation préféré d'un dispositif selon l'invention.
La figure 4 illustre les phases de test du dispositif de la figure 3.

### DESCRIPTION DETAILLEE D'UN MODE DE REALISATION PREFERE

Selon l'invention, la vérification de l'absence de court-circuit résiduel dans une ligne d'alimentation est réalisée par insertion d'un circuit de test électronique fonctionnant de façon unipolaire uniquement lorsqu'il est sollicité. Le dispositif selon l'invention peut être utilisé en combinaison avec un appareil de protection multipolaire, mais ne s'intègre de façon série que dans une seule branche du circuit amont et du circuit aval lors du test, à l'inverse des dispositifs existants placés en parallèle de façon permanente entre les bornes : le dispositif comprend un circuit interne avec seulement deux extrémités de raccordement reliées par un conducteur principal.

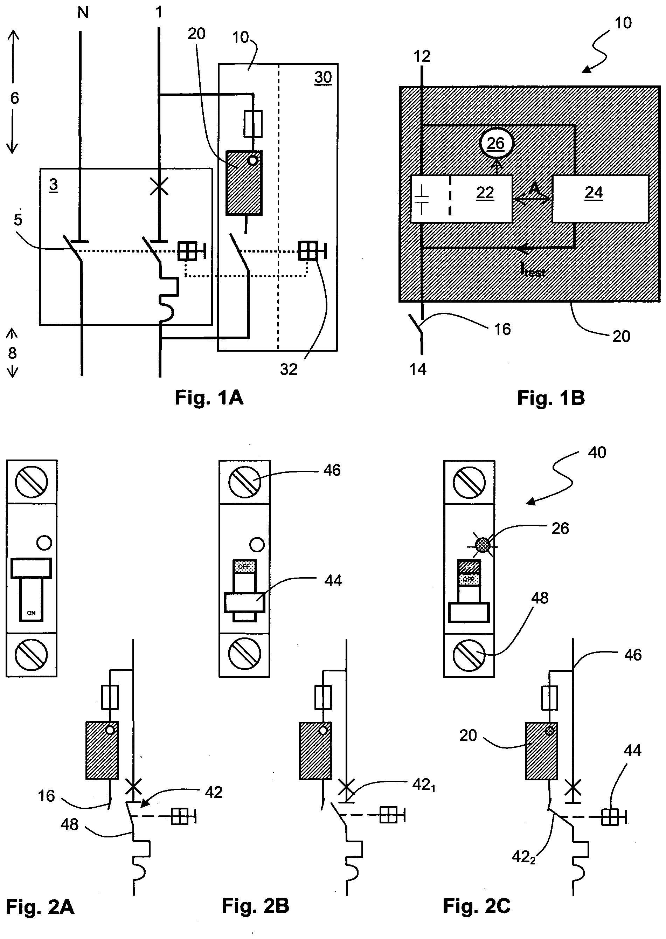

Une installation comprenant un conducteur de phase 1 et un conducteur de neutre N est munie d'un appareil de protection 3 classique, notamment un disjoncteur, qui comprend une paire de contacts 5 mobiles l'un par rapport à l'autre pour séparer un circuit amont 6 d'un circuit aval 8 protégé sur chaque conducteur 1, N. Tel qu'illustré en figure 1A, un dispositif 10 selon l'invention n'est raccordé que sur l'une des branches, de préférence la phase 1 ; le dispositif de test 10, plus détaillé en figure 1B, comprend un circuit électrique raccordé à l'installation au niveau de ses deux seuls moyens de raccordement. Les deux extrémités 12, 14 du conducteur principal de circuit du dispositif 10 se raccordent à la ligne concernée 1 mais, dans la configuration adoptée, ne connectent les circuits amont 6 et aval 8 que lors de sa sollicitation par des moyens interrupteurs de la connexion 16 : en position normale de protection ou d'alimentation, les moyens interrupteurs 16 sont ouverts de sorte que le dispositif 10 est isolé de la ligne 1 et ne consomme pas d'énergie.

Entre les deux extrémités 12, 14 et en série avec les moyens interrupteurs 16, le dispositif 10 selon l'invention comprend un circuit de test 20 du courant circulant entre les extrémités 12, 14. Le circuit 20 comprend une unité de contrôle de passage du courant 22 qui communique à des moyens de test 24, de préférence électroniques, une information A relative au passage du courant (c'est-à-dire à la position de l'interrupteur 16) de façon à les activer. Avantageusement, le dispositif 10 selon l'invention est alimenté par la ligne 1, sans besoin de pile ou réserve d'énergie pour fonctionner, et l'unité de contrôle de passage du courant 22 transmet également, concomitamment à l'information A relative à son activation, l'énergie nécessaire aux moyens de test 24 (le conducteur principal ayant alors deux branches dans le dispositif de test 10) ; les moyens de test sont eux aussi adaptés à une utilisation avec branchement sur un seul conducteur 1 et/ou information provenant d'un seul conducteur 1. Avantageusement, l'unité de contrôle 22 comprend en outre des moyens indicateurs 26, notamment un éclairage de type diode électroluminescente (LED), afin que l'utilisateur puisse vérifier que les moyens interrupteurs 16 sont en position de test et/ou un résultat communiqué par les moyens de test 24. Par exemple, la diode 26, usuellement éteinte, s'allume lorsque le signal A est transmis et indique par une couleur verte qu'aucun court-circuit n'a été détecté, et par une couleur rouge qu'un court-circuit est détecté.

Selon le mode de réalisation illustré, le dispositif selon l'invention 10 peut être un auxiliaire 30 à raccorder sur un disjoncteur 3 existant. Le dispositif 10 peut ainsi être logé dans un boîtier muni de bornes permettant le raccordement des deux extrémités de conducteur 12, 14 en amont et en aval du disjoncteur 3. L'auxiliaire 30 comprend en outre un organe d'actionnement 32 des moyens interrupteurs 16, par exemple un bouton poussoir ; il est alors avantageux de contraindre l'organe d'actionnement 32, par exemple par une came reliée mécaniquement au mécanisme d'ouverture du disjoncteur 3 par l'ouverture appropriée, de sorte à ce que l'organe d'actionnement soit verrouillé lorsque le disjoncteur 3 est fermé, et ne puisse être sollicité qu'en position ouverte.

Selon un autre mode de réalisation, le dispositif 10 selon l'invention est intégré dans un disjoncteur, illustré en figures 2 dans une version unipolaire. Tel qu'usuel, le disjoncteur 40 selon l'invention comprend une paire de contacts 42₁, 42₂ pouvant prendre une première position fermée de passage de courant (figure 2A) et une deuxième position ouverte de coupure (figure 2B) ; un levier ou manette 44 permet l'actionnement de la paire de contacts 42 et prend deux positions distinctes, qui peuvent être repérées par des indicateurs sur le boîtier du disjoncteur 40. Le dispositif de test 10 est mis en parallèle entre les bornes 46, 48 de l'appareil de coupure 40. De préférence, les moyens interrupteurs 16 du dispositif de test 10 sont associés à un contact mobile 42₂ de la paire de contacts 42 du disjoncteur 40 : quelle que soit la position ouverte ou fermée qu'ils prennent, les moyens interrupteurs 16 ne sont alors reliés à la ligne électrique 1 qu'en position ouverte du disjoncteur 40 de façon à éviter tout test en fonctionnement occasionné par une manoeuvre malencontreuse de l'organe d'actionnement des moyens interrupteurs 16.

L'organe d'actionnement des moyens interrupteurs 16 peut, comme pour la figure 1A, être un bouton à pousser, mais avantageusement, la manette 44 d'actionnement des contacts 42 est également utilisée pour actionner les moyens interrupteurs 16. Dans ce cas, la manette 44 prend une troisième position dans laquelle la paire de contacts 42 est ouverte, et le contact mobile 42₂ vient fermer les moyens interrupteurs 16 : figure 2C. Dans cette troisième position de test, de préférence non stable et qu'il faut maintenir, l'unité de contrôle 22 peut entraîner l'éclairage de la diode 26. Dans ce mode de réalisation, le fonctionnement de l'appareil de coupure 40 n'est pas modifié en positions ouverte et fermée, mais l'utilisateur bénéficie d'une troisième position de la manette 44 permettant de tester le circuit ; la troisième position peut être déportée, basse dans le cas illustré, de façon à dissocier la phase de test ; selon une autre option (non illustrée), la troisième position est intermédiaire entre les positions d'ouverture et de fermeture des contacts 42, et telle que le résultat du test permet ou non de continuer la mobilisation de l'organe d'actionnement 44 vers une fermeture du disjoncteur 40.

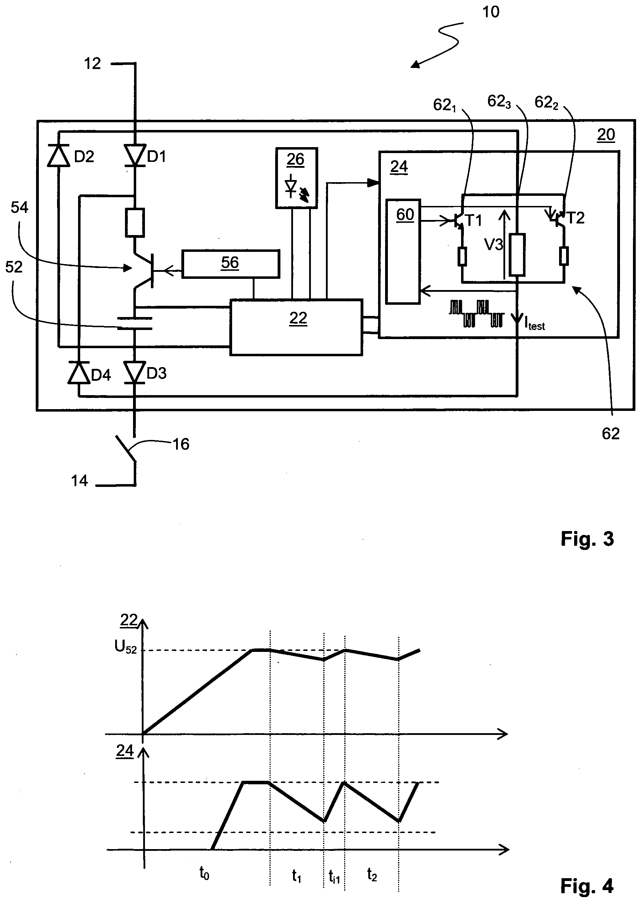

En position de test (figure 2C), dans un premier temps, l'unité de contrôle 22 est alimentée en courant et transmet cette information A aux moyens de test 24 ; ces derniers sont par ailleurs également alimentés via l'unité de contrôle 22 qui, tel que précisé plus haut, est de préférence dénuée de moyens permettant de lui fournir de l'énergie et s'alimente directement sur la ligne 1 lorsque le dispositif 10 est actionné. A cette fin, tel qu'illustré en figure 3, l'unité de contrôle 22 peut être associée, par l'intermédiaire d'un pont de diodes, à un élément capacitif 52 : cette option permet de disposer d'une réserve d'énergie et une alimentation stable de l'unité de contrôle 22 et des moyens de test 24. Avantageusement, un interrupteur 54 normalement passant, de préférence un transistor à effet de champ ou de type JFET (selon la dénomination anglo-saxonne « *Junction Field Effect Transistor* »), permet la charge de la capacité 52, et sa déconnexion de la ligne 1 lorsque la tension fournie par l'élément capacitif 52 est suffisante ; l'interrupteur 54 peut être commandé par un circuit rehausseur 56 qui génère une tension suffisante pour bloquer l'interrupteur 54 lorsque l'unité de contrôle 22 constate la pleine charge de l'élément capacitif 52.

En particulier, comme représenté en figure 4, pendant une période initiale t₀, l'élément capacitif 52 est chargé, avec une première phase dans laquelle les moyens de test 24 ne voient pas de courant passer via l'unité de contrôle 22 et une deuxième phase d'initialisation desdits moyens 24. Une fois que le courant parvenant à l'unité de contrôle 22 est stabilisé, c'est-à-dire que la charge U₅₂ de l'élément capacitif est complétée, l'alimentation directe de l'unité de contrôle 22 est de préférence stoppée par l'interrupteur 54, et une période de test t₁ peut démarrer. Si besoin, lorsque la charge U₅₂ décroît trop et risque de bloquer le fonctionnement de l'unité de contrôle 22 et/ou des moyens de test 24, l'unité de contrôle 22 est ré-énergisée avec fermeture temporaire tᵢ₁ de l'interrupteur 54 pour recharger la capacité 52 ; de préférence, le test est interrompu pendant cette phase puis repris dans un deuxième temps t₂ pendant lequel l'interrupteur 54 interrompt une nouvelle fois la charge pour une alimentation stable via la capacité 52. Ce processus peut se reproduire tant que tous les tests ne sont pas effectués et qu'un résultat définitif n'est pas donné à l'unité de contrôle 22.

Différentes méthodes peuvent être utilisées par les moyens de test 24 pour détecter si le courant Iₜₑₛₜ circulant entre les extrémités 12, 14 du dispositif 10 selon l'invention est de type court-circuit. En particulier, les moyens de test 24 comprennent une unité de traitement 60, alimentée par l'unité de contrôle 22, et permettant d'analyser le courant Iₜₑₛₜ, notamment en comparant sa valeur à un seuil Iₘₐₓ au-delà duquel un court-circuit peut être déclaré. Comme il est préféré que le dispositif 10 selon l'invention soit adapté pour tout type de ligne électrique, et notamment sans connaître au préalable la nature de la charge de ladite ligne 1, avantageusement, les moyens de test 24 comprennent un circuit électrique 62 entre les deux extrémités 12, 14 permettant de donner à l'unité de traitement 60 différentes valeurs et configurations pour un résultat quant à la présence résiduelle d'un court-circuit permettant que la charge connectée à l'alimentation soit résistive, inductive ou capacitive,.

Dans un mode de réalisation préféré, le circuit 62 comprend ainsi trois résistances en parallèle, deux des branches 62₁, 62₂ comprenant en outre des transistors T1, T2 inversés permettant la génération réciproque de signaux hachés positifs et négatifs. L'unité de traitement 60 comprend des moyens permettant d'analyser les valeurs de la tension V3 circulant dans la troisième branche 62₃ et du courant Iₜₑₛₜ résultant qui parcourt la charge et le module de test 24 ; par ailleurs, l'unité de traitement 60 permet de contrôler le signal envoyé aux transistors T1, T2 et donc de moduler le courant circulant dans chacune des branches 62ᵢ. En particulier, la valeur Iₜₑₛₜ est comparée à un seuil Iₘₐₓ sur une période au moins du courant et avec le même signal, inversé, pour les deux transistors T1, T2 : si Iₜₑₛₜ < Iₘₐₓ, il est considéré qu'aucun court-circuit n'est présent.

Dans le cas contraire, Iₜₑₛₜ > Iₘₐₓ, il convient de vérifier que la charge de la ligne n'est pas du type capacitive, avant de statuer qu'il y a un court-circuit : en effet, le comportement d'un circuit capacitif peut en être proche, avec dépassement d'un seuil critique pour Iₜₑₛₜ en raison de la pointe de courant pouvant survenir lorsque l'élément capacitif est vide. A cette fin, l'alimentation du circuit 62 est modifiée, par exemple en ouvrant l'une des branches 62₂ et en réalisant une alimentation uniquement positive qui charge l'élément capacitif. Si le niveau du courant Iₜₑₛₜ diminue, et qu'une tension négative V3 apparaît, le courant de l'alimentation 1 est caractéristique de la décharge d'un condensateur, et non d'un court-circuit. Les moyens de test 24 permettent donc de déterminer séquentiellement les différents aspects : 1/ si Iₜₑₛₜ > Iₘₐₓ en alimentation alternée et 2/ V3 reste invariant entre l'alimentation alternée et l'alimentation hachée, alors 3/ l'unité de traitement 60 envoie un signal à l'unité de contrôle 22 signalant la présence résiduelle d'un court-circuit dans la ligne 1.

Bien que l'invention ait été décrite en référence à un disjoncteur résidentiel, elle ne s'y limite pas : d'autres appareils de protection, par exemple les commutateurs, peuvent être concernés par l'invention. Par ailleurs, le mode de réalisation des tests dans un dispositif selon l'invention peut comprendre toute autre alternative. Enfin, les différents composants décrits en combinaison peuvent être utilisés seuls ou avec d'autres alternatives.

## Revendications

1. Dispositif de test de court-circuit (10) comprenant un circuit électrique avec deux extrémités (12, 14) de conducteur, lesdites extrémités (12, 14) étant destinées à se raccorder sur un conducteur de ligne électrique (1) seulement, dans lequel ledit circuit comprend un conducteur principal, des moyens interrupteurs (16) de la connexion entre lesdites deux extrémités (12, 14) en série avec une unité (22) de contrôle du passage de courant entre les deux extrémités (12, 14), et
**caractérisé en ce que**
ledit circuit comprend en outre des moyens de test (24) en parallèle avec l'unité de contrôle (22), lesdits moyens de test (24) étant adaptés pour être utilisés sur un conducteur seulement et aptes à être activés par l'unité de contrôle (22), et adaptés pour déterminer si le courant passant entre les deux extrémités (12, 14) est un court-circuit lorsque lesdits moyens de test (24) sont raccordés sur le conducteur (1) de ligne auquel les extrémités (12,14) de conducteur du circuit électrique du dispositif de test (10) sont destinées à se raccorder.

2. Dispositif selon la revendication 1 comprenant en outre un élément capacitif (52) associé à l'unité de contrôle (22) et permettant de lui fournir de l'énergie à partir de la ligne électrique (1) lorsque les moyens interrupteurs (16) sont fermés.

3. Dispositif selon l'une des revendications 1 ou 2 comprenant en outre des moyens (26) indicateurs de la position des moyens interrupteurs (16) et associés à l'unité de contrôle (22).

4. Dispositif selon la revendication 3 dans lequel les moyens indicateurs (26) comprennent des moyens de type diode permettant de donner une indication du résultat obtenu par les moyens de test (24).

5. Dispositif selon l'une des revendications 1 à 4 dans lequel les moyens de test (24) comprennent une unité de traitement (60) et un circuit électrique (62) raccordé aux deux extrémités (12, 14), dans lequel l'unité de traitement (60) est adaptée pour recevoir des signaux représentatifs des grandeurs électriques (Iₜₑₛₜ, V3) du circuit (62).

6. Dispositif selon la revendication 5 dans lequel le circuit électrique (62) comprend plusieurs branches (62ᵢ) en parallèle et l'unité de traitement (60) comprend des moyens permettant de commander l'alimentation des branches (62₁, 62₂) et de traiter les signaux représentatifs de sorte à détecter un courant de court-circuit dans une ligne inductive et/ou capacitive et/ou résistive.

7. Appareil de test (30) comprenant un dispositif de test (10) selon l'une des revendications 1 à 6 et un boîtier le logeant, qui est muni de bornes permettant de raccorder les extrémités (12, 14) du dispositif de test (10) à un appareil de protection (3), et d'un organe (32) permettant d'actionner les moyens interrupteurs (16) dudit dispositif (10).

8. Appareil de protection électrique (40) comprenant au moins une paire de contacts (42) mobiles relativement l'un à l'autre, une manette (44) d'actionnement des contacts (42) entre une première position de passage du courant dans laquelle les contacts sont fermés et une deuxième position de coupure dans laquelle les contacts sont écartés, un dispositif de test (10) selon l'une des revendications 1 à 6 en parallèle autour d'une paire de contact (42), et un organe d'actionnement des moyens interrupteurs (16) du dispositif de test (10).

9. Appareil selon la revendication 8 dans lequel l'organe d'actionnement est formé par la manette (44) qui peut prendre une troisième position de test dans laquelle les contacts (42) sont écartés et les moyens interrupteurs (16) du dispositif de test (10) permettent le passage de courant dans ledit dispositif (10).

10. Appareil selon la revendication 8 dans lequel l'organe d'actionnement des moyens interrupteurs (16) est associé un mécanisme tel que ledit organe ne peut être actionné que lorsque la manette (44) est dans la deuxième position.

## Patentansprüche

1. Kurzschlusstestvorrichtung (10), umfassend eine elektrische Schaltung mit zwei Leiterenden (12, 14), wobei die Enden (12, 14) nur zum Anschließen an einem Leiter einer elektrische Leitung (1) bestimmt sind, wobei die elektrische Schaltung einen Hauptleiter, Schalteinrichtungen (16) der Verbindung zwischen den beiden Enden (12, 14) in Reihe mit einer Einheit (22) zur Steuerung des Stromflusses zwischen den beiden Enden (12, 14) umfasst, und **dadurch gekennzeichnet ist, dass** die Schaltung ferner Testeinrichtungen (24) parallel zu der Steuereinheit (22) umfasst, wobei die Testeinrichtungen (24) durch die Steuereinheit (22) aktiviert werden und ausgelegt sind, um zu bestimmen, ob der zwischen den beiden Enden (12, 14) fließende Strom ein Kurzschluss ist, wenn die Testeinrichtungen (24) an dem Leiter (1) der Leitung angeschlossen sind, an dem die Enden (12, 14) des Leiters der elektrischen Schaltung der Testvorrichtung (10) angeschlossen werden sollen.

2. Vorrichtung nach Anspruch 1, umfassend ferner ein kapazitives Element (52), das mit der Steuereinheit (22) assoziiert ist und es ihm ermöglicht, Energie aus der elektrischen Schaltung (1) bereitzustellen, wenn die Schalteinrichtungen (16) geschlossen sind.

3. Vorrichtung nach einem der Ansprüche 1 oder 2, ferner umfassend Einrichtungen (26), die die Position der Schalteinrichtungen (16) anzeigen und mit der Steuereinheit (22) assoziiert sind.

4. Vorrichtung nach Anspruch 3, wobei die Anzeigeeinrichtungen (26) Einrichtungen vom Typ Diode umfassen, die es ermöglichen, das Ergebnis, das durch die Testeinrichtungen (24) erhalten wurde, anzuzeigen.

5. Vorrichtung nach einem der Ansprüche 1 bis 4, wobei die Testeinrichtungen (24) eine Verarbeitungseinheit (60) und eine elektrische Schaltung (62) umfassen, die an die zwei Enden (12, 14) angeschlossen ist, wobei die Verarbeitungseinheit (60) ausgelegt ist, um Signale zu empfangen, die für elektrische Größen (Iₜₑₛₜ, V3) der Schaltung (62) repräsentativ sind.

6. Vorrichtung nach Anspruch 5, wobei die elektrische Schaltung (62) parallel mehrere Zweige (62ᵢ) umfasst und die Verarbeitungseinheit (60) Einrichtungen zum Steuern der Versorgung der Zweige (62₁, 62₂) und zum Verarbeiten der repräsentativen Signale umfasst, um einen Kurschlussstrom in einer induktiven und/oder kapazitiven und/oder resistiven Leitung zu erfassen.

7. Testvorrichtung (30), umfassend eine Testvorrichtung (10) nach einem der Ansprüche 1 bis 6 und ein Gehäuse, in dem sie untergebracht ist, das mit Anschlüssen zum Anschließen der Enden (12, 14) der Testvorrichtung (10) an ein Schutzgerät (3) versehen ist, und ein Element (32) zum Betätigen der Schalteinrichtungen (16) der Vorrichtung (10).

8. Elektrisches Schutzgerät (40), umfassend mindestens ein Paar von Kontakten (42), die zueinander beweglich sind, einen Griff (44) zum Betätigen der Kontakte (42) zwischen einer ersten Stromflussposition, in der die Kontakte geschlossen sind und einer zweiten Unterbrechungsposition, in der die Kontakte beabstandet sind, eine parallele Testvorrichtung (10) nach einem der Ansprüche 1 bis 6 um ein Kontaktpaar (42), und ein Element zum Betätigen der Schalteinrichtungen (16) der Testvorrichtung (10).

9. Gerät nach Anspruch 8, wobei das Betätigungselement aus dem Griff (44) gebildet ist, der eine dritte Testposition einnehmen kann, in der die Kontakte (42) beabstandet sind und die Schalteinrichtungen (16) der Testvorrichtung (10) den Stromfluss in die Vorrichtung (10) ermöglichen.

10. Gerät nach Anspruch 8, wobei das Betätigungselement der Schalteinrichtungen (16) mit einem Mechanismus assoziiert ist, so dass das Element nur betätigt werden kann, wenn sich der Griff (44) in der zweiten Position befindet.

## Claims

1. Short-circuit test device (10) comprising an electrical circuit having two conductive ends (12, 14), said ends (12, 14) being intended to be connected to just one electrical line conductor (1), wherein said circuit comprises a main conductor, switch means (16) for switching the connection between said two ends (12, 14), in series with a unit (22) for monitoring the flow of current between the two ends (12, 14), and **characterized in that** said circuit furthermore comprises test means (24) in parallel with the monitoring unit (22), said test means (24) being designed so as to be used on just one conductor and able to be activated by the monitoring unit (22), and designed so as to determine whether the current flowing between the two ends (12, 14) is a short circuit when said test means (24) are connected to the line conductor (1) to which the conductive ends (12, 14) of the electrical circuit of the test device (10) are intended to be connected.

2. Device according to Claim 1, furthermore comprising a capacitive element (52) associated with the monitoring unit (22) and making it possible to supply said monitoring unit with power from the electrical line (1) when the switch means (16) are closed.

3. Device according to either of Claims 1 and 2, furthermore comprising indicator means (26) for indicating the position of the switch means (16) and associated with the monitoring unit (22).

4. Device according to Claim 3, wherein the indicator means (26) comprise diode-type means for giving an indication of the result obtained by the test means (24).

5. Device according to one of Claims 1 to 4, wherein the test means (24) comprise a processing unit (60) and an electrical circuit (62) connected to the two ends (12, 14), wherein the processing unit (60) is designed so as to receive signals representative of the electrical values (Iₜₑₛₜ, V3) of the circuit (62).

6. Device according to Claim 5, wherein the electrical circuit (62) comprises a plurality of branches (62ᵢ) in parallel and the processing unit (60) comprises means for controlling the supply of power to the branches (62₁, 62₂) and for processing the representative signals so as to detect a short-circuit current in an inductive and/or capacitive and/or resistive line.

7. Test apparatus (30) comprising a test device (10) according to one of Claims 1 to 6 and a housing accommodating it, which is equipped with terminals for connecting the ends (12, 14) of the test device (10) to a protection apparatus (3), and with a unit (32) for actuating the switch means (16) of said device (10).

8. Electrical protection apparatus (40) comprising at least one pair of contacts (42) able to move relative to one another, a lever (44) for actuating the contacts (42) between a first current flow position in which the contacts are closed and a second disconnection position in which the contacts are spaced apart, a test device (10) according to one of Claims 1 to 6 in parallel around a pair of contacts (42), and a unit for actuating the switch means (16) of the test device (10).

9. Apparatus according to Claim 8, wherein the actuation unit is formed by the lever (44), which is able to adopt a third test position in which the contacts (42) are spaced apart and the switch means (16) of the test device (10) allow current to flow in said device (10).

10. Apparatus according to Claim 8, wherein the unit for actuating the switch means (16) is associated with a mechanism, such that said unit is able to be actuated only when the lever (44) is in the second position.
